Europäisches Patentamt

(19) European Patent Office

Office européen des brevets

(11) Publication number: **0 132 287**
A1

(12) # EUROPEAN PATENT APPLICATION

(21) Application number: **84303992.6**

(22) Date of filing: **13.06.84**

(51) Int. Cl.⁴: **A 01 G 7/00**

(30) Priority: **17.06.83 GB 8316509**
**17.05.84 GB 8412645**

(43) Date of publication of application: **30.01.85**
**Bulletin 85/5**

(84) Designated Contracting States: **BE DE FR IT NL**

(71) Applicant: **NATIONAL RESEARCH DEVELOPMENT CORPORATION, 101 Newington Causeway, London SE1 6BU (GB)**

(72) Inventor: **Jackson, John Ellwood, 2 The Grange, East Malling Maidstone, Kent (GB)**

(74) Representative: **Trevor-Briscoe, David William, Patent Department National Research Development Corporation 101 Newington Causeway, London SE1 6BU (GB)**

(54) **Anchorage of fruit trees and other plants.**

(57) A rooted shoot of a rootstock (obtained from a stoolbed or from one or other sort of cutting) is planted in a nursery at relatively shallow depth (often about 8 inches). A scion is next grafted on to the rootstock and part of the rootstock above ground is wrapped in black polythene to produce localised blanching. The plant is then left in the nursery for root 'initials', and possibly some roots, to form under the polythene. After usually one year, the plant is moved to its final location in the field planted to a depth such as to immerse in the soil the stem section blanched during its period in the nursery. A similar method of initiating the desired root growth by cutting or scoring the basal section is also described.

125731

ANCHORAGE OF FRUIT TREES AND OTHER PLANTS

The present invention relates to the anchorage of fruit trees and other plants.

Commercially-available fruit trees usually consist of a scion variety, e.g. Cox or Bramley apple, budded or grafted on a rootstock although it is possible that more in future will be produced on their own root systems. Other commercially-produced trees and shrubs similarly may be budded or grafted on a rootstock or be self-rooted.

In all cases the characteristic system of production involves:-

(i) Stage 1. In this, rootstock or own-root scion initiates a root system.

(ii) Stage 2. In this, the plant produced in Stage 1 is planted out in a nursery environment (this customarily being referred to as a lining-out or as 'bedding' followed by lining-out) in order that it can grow. In the case of rootstocks, the act of budding or grafting with a scion usually takes place after lining-out.

(iii) Stage 3. This consists of lifting the tree from the nursery site for sale and is followed by planting it in an orchard, garden, park, woodland or other such place.

It is clear from the above that, in the conventional practice of producing trees, the work which is designed to promote the initiation of roots is carried out at Stage 1. Indeed, the induction of root initiation and emergence is generally considered to be part of the process of propagation either by seed or, more commonly, in the case of fruit trees, by the vegetative multiplication of clonal rootstocks. For this latter the established techniques include stooling and layering in which roots are induced to form on shoots still attached to the parent rootstock plant; also the use of hardwood and softwood cuttings which are induced to root after being separated from a parent plant and the use of micropropagation techniques of shoot-tip culture.

Trees produced using these conventional techniques are often poorly anchored following their transplanting into their permanent site, e.g. the orchard. They are often also subject to poor 'establishment' in their new site and poor growth consequent on poor root development.

Previous attempts to ameliorate the problem of poor anchorage of trees on vegetatively-propagated rootstocks have included use of the technique of planting the tree deeper in the orchard than it was planted in the nursery. This has proved successful with trees on some rootstocks but has not been found generally acceptable with trees on the rootstock Malling 9 which is one of the most widely used rootstocks for apples world-wide. It is generally considered that trees on Malling 9 rootstock need secure staking if they are not to be at risk in all but the most sheltered situations.

It also needs to be noted that as the stake will normally provide support for the plant throughout the typical twenty years or so of the plant's useful life, the stake must be substantial and staking of this sort is expensive. Nor can the cost of the stake be spread over the useful lifespan of several plants because the deterioration in the stake over this period will be such that it cannot safely be used again for subsequent plants.

An object of the present invention is to improve the anchorage provided by the plant itself, preferably at least to the point where staking will be required for only the first few years after transplanting. Not only does this mean that the stakes can be re-used for subsequent plants but it also allows relatively insubstantial and hence much cheaper stakes to be utilised, e.g. canes instead of the stakes of up to 8 ft in length and 2 inches or more diameter employed up to now.

According to the present invention, a method of improving the anchorage and, possibly, establishment of a plant e.g. tree, bush or shrub comprises treating a basal section of the stem of the plant when the plant is at a preliminary growing location, e.g. in the nursery, and, when significant conditioning to induce root initiation or emergence has taken place within the said section thereafter transplanting the plant in its final location, e.g. in the field, to a depth such as to bring the top of the treated section at or near to ground level.

Conveniently, the basal section of the otherwise exposed stem of the plant is treated by shielding it from light (blanching) when the plant is at a preliminary growing location so as to blanch it.

Convenient methods for shielding the basal section of the plant stem from light include wrapping the section in polythene or other flexible sheet material or painting it or piling earth or other particulate material around it. Other shielding materials may occur to those skilled in the art without departing from the scope of the present invention e.g. the paper- or plastic-based fabrics currently used to protect young plants from damage by rabbits, or split tubing of rubber or other material.

When paint or polythene etc. are used for the shielding material, these are preferably black so as to encourage the absorption of radiant energy from the surroundings thus favouring localised warming of the treated section.

Conveniently, the basal section of the plant may be treated with an appropriate e.g. commercially-available, plant hormone before applying the shielding material or the hormone may be incorporated in this so as further to encourage formation and development of root initials.

As an alternative to blanching, the basal section of the stem may be treated by cutting or scoring it. It is envisaged that this will result in a callus being produced from which roots can develop.

As compared with existing techniques it is surprising and quite contrary to currently accepted teaching that blanching etc. as above described can by itself lead to profuse root initiation in the relatively mature, hard and woody tissues of a stem base whose primary development was completed at least one year before application of the blanching or other treatment referred to above. Until now, it has always been assumed that blanching etc. as techniques to encourage rooting are only of use if commenced while the shoots are young and green as is the case when it is applied in the processes of rootstock propagation. Furthermore, the conceptual linkage between the idea of treating the lower, but the above ground, part of a rootstock or other tree stem in the nursery to encourage root initiation and the idea of improvement in anchorage and establishment by subsequent transplanting of the tree into the orchard or other site at a greater depth than it was planted in the nursery has never previously been made.

The invention also includes a plant or rootstock treated in accordance with the method of the present invention and, in particular, one in which etiolation or blanching had been used to encourage root initiation in the course of vegatative propagation earlier in the production process. It also includes the use of the technique on trees or rootstocks which have been originally produced by micropropagation techniques.

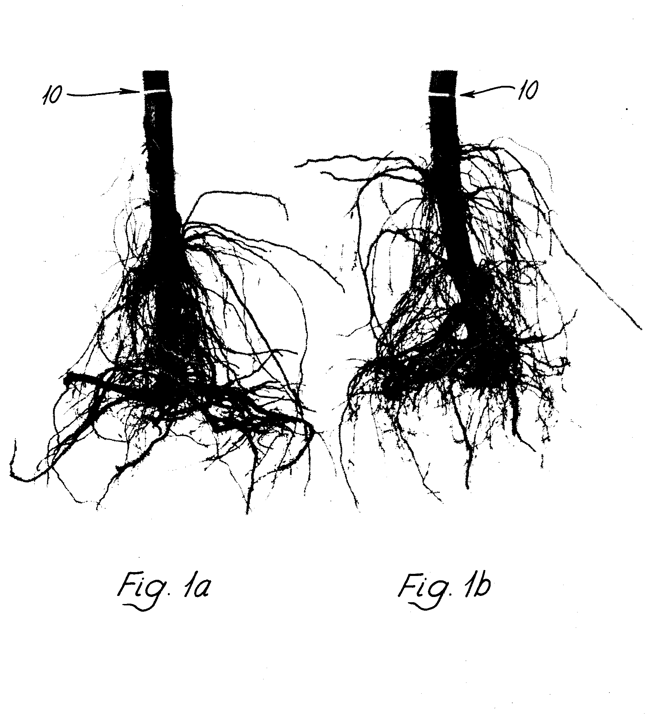

One version of the invention will now be described with reference to the accompanying drawings in which Figure 1(a) shows a typical Malling 9 rootstock developed by the conventional technique and Figure 1(b) shows the same type of rootstock developed by the method of the present invention. In both cases the rootstocks are shown as they appear about one year after transplanting to their final location in the field, reference numeral 10 indicating the depth to which they are planted in this location.

Thus referring first to Figure 1(b) of the drawings the rootstock shown there was developed by the following process:-

Rooted shoots of Malling 9 are harvested from a conventional stoolbed and planted to a depth of about 8 inches in a nursery. After one growing season the scion (not shown) is grafted or 'budded' on to the rootstock. As growth commences the following spring, the first 6 inches (say) of the rootstock above ground is wrapped in black polythene to blanch the underlying stem segment. By the end of the growing season root 'initials', and some roots, will have formed under the polythene.

Before growth starts the following spring, the plant is transplanted to its final location in the field where it is inserted to a depth of about 14 inches so as to immerse in the soil the stem section blanched by covering with black polythene during its period in the nursery. For the maximum response it may be preferable to start the blanching treatment one year earlier, when the rootstocks have just been planted in the nursery.

In variations of this method, paint (preferably water-based black vinyl emulsion) may be used instead of the polythene to shield the basal section of the plant and, as already mentioned in the introduction, it is also envisaged that satisfactory results may also be obtained by using paper-based fabric or even by heaping soil or other particulate material around the exposed stem section in the nursery.

In other modifications, the stem section is treated with a rooting compound e.g. a synthetic auxin (such as IBA) before applying the polythene or other shielding material or if paint is used for shielding this can incorporate the rooting compound instead.

It has been shown, for example, that painting the above-ground rootstock stem in the nursery with black paint including a synthetic auxin (IBA) causes large numbers of root initials to be formed and evidenced as multi-pointed bumps, i.e. with roots ready to emerge but not yet broken through the surface. This has many benefits from the handling point of view insofar as the roots should emerge only after planting and therefore cannot be damaged or dry out. Once the tree has been planted, however, they should emerge very rapidly.

Use of a rooting compound could also be used to reduce planting costs. It is well known that a fruit tree can establish in a new site reasonably well if all the roots are trimmed off before planting because new roots emerge from the sites of the trimmed ones fairly quickly. Some growers do this already so that a tree can be planted simply by pushing it into prepared ground but there is some penalty in terms of slower growth to counterbalance the labour-saving. By pre-inducing a lot of other root initials this technique could be made much safer. The technique of planting a tree trimmed of its roots is particularly attractive when tree numbers per hectare are high and it is wished to plant them through a polythene mulch for weed control and water conservation.

It is thought that the method of the present invention may result not only in improved root growth on the young trees but also in greater rate of establishment of the trees in the field. In this latter respect it could be attractive for 'good-rooting' rootstocks as well as for different types of fruit trees, and other trees and shrubs.

Figure 1(a) shows for comparison rooting of the rootstock part of a fruit tree produced by the conventional technique prior to deep-planting in the orchard and it will be observed that although the bottom roots of the plant (arising from that part of the stem which had been below-ground in the nursery) are fairly well developed, the upper root system is significantly inferior to that present in the plant of Figure 1(b).

20D

CLAIMS

1. A method of improving the anchorage of a plant characterised in that it comprises treating a basal section of the stem of the plant when the plant is at a preliminary growing location and, when significant conditioning to induce root initiation or emergence has taken place within said section, thereafter transplanting the plant in its final location to a depth such as to bring the top of the treated section at or near to ground level.

2. A method as claimed in Claim 1 characterised in that the basal section of the otherwise exposed stem of the plant is treated by shielding it from light so as to blanch it.

3. A method as claimed in Claim 2 characterised in that the basal section of the plant stem is shielded from light by wrapping the section in polythene, paper-based fabrics, or other flexible sheet material or by painting it or by piling earth or other particulate material around it.

4. A method as claimed in Claim 3 when plastic material or paint is used for the shielding material characterised in that the plastic material or paint is black so as to encourage the absorption of radiant heat from the surroundings.

5. A method as claimed in any of Claims 2 to 4 characterised in that the basal section of the plant is treated with an appropriate plant hormone before applying the shielding material or a plant hormone is incorporated in the shielding material so as further to encourage root initiation.

6. A method as claimed in Claim 1 characterised in that the basal section of the stem is treated by cutting or scoring it.

7. A plant or rootstock characterised in that it has been treated in accordance with the method of any of Claims 1 to 6.

8. A plant or rootstock as claimed in Claim 7 characterised in that it has been derived from a conventionally-etiolated green shoot or by the method of micropropagation.

1/1

0132287

Fig. 1a          Fig. 1b

European Patent Office

**EUROPEAN SEARCH REPORT**

0132287

Application number

EP 84 30 3992

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-1 322 148 (SHIONOGI & CO. LTD.) * Page 1, lines 50-63; Figure 2E * | 1 | A 01 G 7/00 |
| | --- | | |
| A | DE-C-1 154 969 (S. HERRMANN) * Complete document * | 2 | |
| | ----- | | |

| | |
|---|---|
| | **TECHNICAL FIELDS SEARCHED (Int. Cl. 3)** |
| | A 01 G 7/00<br>A 01 G 17/00 |

The present search report has been drawn up for all claims

| Place of search | Date of completion of the search | Examiner |
|---|---|---|
| BERLIN | 11-09-1984 | WUNDERLICH J E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82